(19) Europäisches Patentamt
European Patent Office
Office européen des brevets

(11) **EP 2 072 399 B1**

(12) **FASCICULE DE BREVET EUROPEEN**

(45) Date de publication et mention
de la délivrance du brevet:
**08.02.2012 Bulletin 2012/06**

(51) Int Cl.:
***B64D 43/00*** *(2006.01)*     ***B64D 45/00*** *(2006.01)*
***F01D 21/00*** *(2006.01)*

(21) Numéro de dépôt: **08172178.9**

(22) Date de dépôt: **18.12.2008**

(54) **Procédé et système de caractérisation et de comptage de dépassements d'un seuil par un paramètre de fonctionnement d'un moteur d'aéronef**

Verfahren und System zur Kennzeichnung und Zählung von Überschreitungen eines Schwellwerts durch einen Funktionsparameter eines Flugzeugstriebwerks

Method and system for characterising and counting violations of a threshold by an aircraft engine operating parameter

(84) Etats contractants désignés:
**DE FR GB**

(30) Priorité: **21.12.2007 FR 0760245**

(43) Date de publication de la demande:
**24.06.2009 Bulletin 2009/26**

(73) Titulaire: **SNECMA**
**75015 Paris (FR)**

(72) Inventeur: **Lecerf, Nicolas**
**91230 Montgeron (FR)**

(74) Mandataire: **Boura, Olivier et al**
**Cabinet Beau de Loménie**
**158, rue de l'Université**
**75340 Paris Cedex 07 (FR)**

(56) Documents cités:
**EP-A- 0 971 321     EP-A- 1 122 694**
**EP-A- 1 512 628**

## Description

Arrière-plan de l'invention

L'invention concerne la surveillance de moteurs d'aéronef et plus particulièrement de moteurs d'aéronef à turbines à gaz.

Il existe aujourd'hui des systèmes permettant de collecter à différents instants des paramètres représentatifs des performances d'un moteur d'un aéronef en vol. Ces paramètres sont par exemple la consommation de carburant, la vitesse de rotation du corps haute pression, etc. Ils sont ensuite transmis, via par exemple une liaison VHF ou satellite, à un dispositif au sol en charge de les analyser. Le document EP 1122 694 décrit un tel système et comprend les caractéristiques des préambules des revendications 1 et 6.

Les analyses menées au sol sont relativement complexes, du fait notamment du nombre important de données récoltées à traiter. Par ailleurs elles nécessitent souvent l'intervention d'au moins une personne, ce qui les rend vulnérables aux erreurs humaines de saisie, d'interprétation, etc.

Par conséquent, il existe un besoin d'un procédé (et d'un système) simple et fiable permettant d'exploiter des données obtenues en vol et représentatives du fonctionnement d'un moteur d'un aéronef, et ce afin notamment de faciliter la maintenance des moteurs.

Objet et résumé de l'invention

Selon un premier aspect, la présente invention propose à cet effet un procédé de caractérisation et de comptage de dépassements d'un seuil par un paramètre de fonctionnement d'un moteur d'aéronef, ce procédé comprenant :

- une étape de détection par l'aéronef d'un dépassement du seuil par le paramètre au cours du fonctionnement du moteur ;
- sur détection de ce dépassement, une étape de transmission automatique par l'aéronef à un système au sol d'un message d'alerte relatif au dépassement ;
- à partir de ce message, une étape de détermination automatique d'un niveau de sévérité du dépassement ;
- une étape d'incrémentation d'un compteur représentatif du nombre de fois où le paramètre de fonctionnement du moteur a connu un dépassement correspondant à ce niveau de sévérité.

L'invention propose ainsi un procédé de surveillance simple d'un moteur d'aéronef. Ce procédé permet de caractériser le niveau de sévérité d'un dépassement d'un seuil (d'alerte) observé par un paramètre, afin notamment de comptabiliser le nombre de dépassements détectés correspondant à ce niveau de sévérité.

Le procédé selon l'invention ne traite avantageusement que les messages d'alerte associés à un dépassement de seuil par un paramètre de fonctionnement du moteur. De cette sorte, le nombre de données analysées par le procédé selon l'invention est relativement limité.

L'analyse des valeurs des compteurs ainsi obtenus pour différents niveaux de sévérité peut permettre en aval à l'exploitant de l'aéronef d'adapter les opérations de maintenance à mettre en oeuvre sur le moteur.

Par ailleurs, ce procédé est entièrement automatisé. Les risques d'erreurs d'interprétation ou de comptabilisation sont ainsi écartés, ce qui en fait un procédé de surveillance du moteur fiable et robuste.

Le procédé selon l'invention peut s'appliquer à la caractérisation et au comptage de dépassements de seuils de divers paramètres de fonctionnement d'un moteur.

En particulier, le procédé selon l'invention s'applique de façon privilégiée mais non limitative à la surveillance de la température des gaz en sortie de la chambre de combustion du moteur de l'aéronef, aussi communément appelée EGT (Exhaust Gaz Temperature). Ce paramètre est très important car il conditionne le potentiel de durée de vie d'un moteur d'aéronef en fonctionnement.

Dans un mode particulier de réalisation de l'invention, le message d'alerte transmis au système au sol est associé à une phase de vol de l'aéronef et comporte au moins une valeur prise par le paramètre de fonctionnement lors du dépassement ainsi que la durée du dépassement.

Au sens de l'invention, la valeur prise par le paramètre de fonctionnement lors du dépassement comprise dans le message d'alerte peut être de différentes natures. Ainsi, il peut s'agir par exemple de la valeur maximale de la température mesurée sur la durée du dépassement.

En variante, il peut s'agir d'une valeur moyenne de la température évaluée sur la durée du dépassement.

Dans un mode particulier de réalisation de l'invention, le niveau de sévérité du dépassement est déterminé, parmi une pluralité de niveaux de sévérité prédéfinis, à partir de la valeur prise par le paramètre lors du dépassement et de la durée du dépassement, contenues dans le message d'alerte transmis au système au sol.

Dans un autre mode de réalisation de l'invention, au cours de l'étape de détermination automatique du niveau de sévérité du dépassement :

- on sélectionne un diagramme correspondant au moteur et à la phase en vol de l'aéronef et associé au paramètre de fonctionnement en dépassement, ce diagramme représentant en fonction des valeurs prises par le paramètre et des durées pendant lesquelles le paramètre prend ces valeurs, une pluralité de zones géométriques de sévérité, chaque zone géométrique de sévérité correspondant à un niveau de sévérité distinct ; et

- on identifie sur le diagramme à quelle zone de sévérité appartient le point dont les coordonnées sont données par la valeur et la durée contenues dans le message d'alerte.

Selon un deuxième aspect, l'invention vise également un système de caractérisation et de comptage de dépassements d'un seuil par un paramètre de fonctionnement d'un moteur d'aéronef à partir d'au moins un message d'alerte relatif à un tel dépassement transmis automatiquement par l'aéronef, ce système comprenant :

- des moyens pour déterminer automatiquement, sur réception du message d'alerte, un niveau de sévérité du dépassement ; et
- des moyens pour incrémenter un compteur représentatif du nombre de fois où le paramètre de fonctionnement du moteur a connu un dépassement correspondant au niveau de sévérité.

Dans un mode particulier de réalisation de l'invention, les moyens pour déterminer automatiquement le niveau de sévérité du dépassement comportent :

- des moyens pour sélectionner un diagramme correspondant au moteur et à la phase en vol de l'aéronef et associé au paramètre de fonctionnement en dépassement, ce diagramme représentant en fonction des valeurs prises par le paramètre et des durées pendant lesquelles le paramètre prend ces valeurs, une pluralité de zones géométriques de sévérité, chaque zone géométrique de sévérité correspondant à un niveau de sévérité distinct ; et
- des moyens pour identifier sur le diagramme à quelle zone de sévérité appartient le point dont les coordonnées sont données par la valeur et la durée contenues dans le message d'alerte pour le paramètre en dépassement.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, sous la forme d'un organigramme, les principales étapes d'un procédé de caractérisation et de comptage de dépassements d'un seuil par un paramètre de fonctionnement d'un moteur d'aéronef, conforme à l'invention, dans un mode particulier de réalisation ;
- la figure 2 représente, schématiquement, un exemple d'un diagramme de sévérité pouvant être utilisé pour déterminer le niveau de sévérité d'un dépassement observé par le paramètre EGT ;

- la figure 3 représente, sous la forme d'un organigramme, les principales étapes pouvant être mises en oeuvre pour identifier la zone de sévérité à laquelle appartient un point P sur un diagramme de sévérité, dans un mode particulier de réalisation de l'invention ; et
- la figure 4 représente un exemple de polygone $\Theta(C)$ connexe associé à la zone de sévérité C pouvant être considéré au cours de l'étape de détermination du niveau de sévérité d'un dépassement du procédé selon l'invention, dans un mode particulier de réalisation.

Description détaillée d'un mode de réalisation

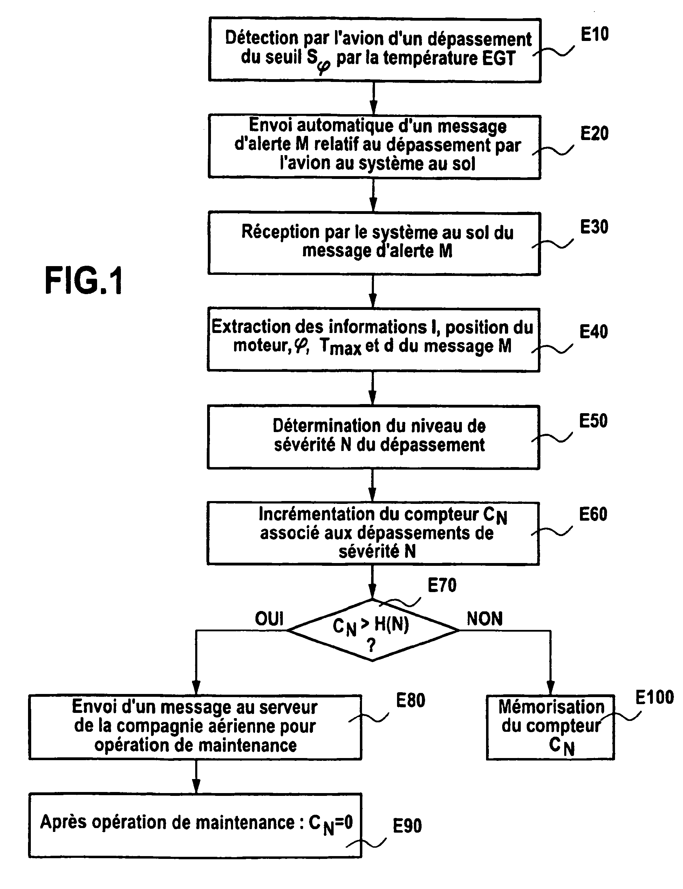

Dans l'exemple décrit ici, on envisage la caractérisation et le comptage de dépassements d'un seuil par un paramètre de fonctionnement d'un moteur à turbine à gaz équipant un avion. L'invention est toutefois applicable à d'autres types d'aéronefs, tels un hélicoptère, etc.
Le paramètre de fonctionnement considéré ici est la température des gaz en sortie de la chambre de combustion du moteur (ci-après désignée par « température EGT », Exhaust Gaz Température). Cet exemple n'est cependant en aucun cas limitatif. L'invention peut en effet s'appliquer à la caractérisation et au comptage de dépassements d'un seuil par d'autres paramètres, tels que par exemple, une pression d'huile.
On se référera tout d'abord à la figure 1 qui représente les principales étapes E10 à E100 d'un mode particulier de réalisation du procédé selon l'invention. Sur cette figure, les étapes E10 et E20 sont mises en oeuvre par des moyens adéquats équipant l'avion, tandis que les étapes E30 à E100 sont réalisées par un système au sol de caractérisation et de comptage de dépassements d'un seuil par un paramètre de fonctionnement d'un moteur d'aéronef conforme à l'invention (et ci-après désigné par « système au sol »).
Selon une première étape du procédé (étape E10), un dépassement d'un seuil d'alerte par la température EGT du moteur est détecté par l'avion au cours d'une phase de vol $\varphi$.
Pour détecter un tel dépassement, une mesure de la température EGT est tout d'abord réalisée à l'aide de capteurs localisés dans le moteur de l'avion. De tels capteurs, bien connus en soi, permettent de mesurer en continu ou périodiquement la température EGT.
La mesure ainsi obtenue est ensuite mémorisée et analysée par un logiciel d'analyse, doté d'un comparateur, et adapté à comparer en temps réel cette mesure avec un seuil d'alerte $S_\varphi$. Lorsqu'un dépassement du seuil $S_\varphi$ est détecté, le logiciel d'analyse permet également de déterminer la durée d du dépassement ainsi que la valeur maximale $T_{max}$ atteinte par la température EGT lors du dépassement.
Dans l'exemple décrit ici, le seuil $S_\varphi$ correspond

à un seuil représentatif d'un fonctionnement supposé anormal du moteur. En pratique, ce seuil $S_\varphi$ varie en fonction de la phase du vol $\varphi$ de l'avion, chaque phase de vol $\varphi$ étant associée à un régime de fonctionnement du moteur (ex : « régime nominal », « pleins gaz » ou « ralenti »). Ainsi, notamment, le seuil $S_\varphi$ considéré sera plus élevé lors du décollage de l'avion (régime « pleins gaz ») que lorsque celui-ci aura atteint sa vitesse de croisière (régime « nominal »).

Suite à la détection du dépassement du seuil $S_\varphi$ par la température EGT du moteur, l'avion envoie automatiquement un message M d'alerte au système au sol (étape E20).

A cette fin, l'avion est équipé d'un système de transmission lui permettant de transmettre en temps réel des informations au système au sol. Ce système de transmission est par exemple un système ACARS (Aircraft Communications Addressing and Reporting System) utilisant des liaisons HF, VHF ou satellite. De façon connue, les messages transmis via le système ACARS sont reçus par une station au sol adaptée à recevoir de tels messages (récepteur équipé d'une antenne et d'un décodeur adéquats) et à les router vers le système au sol.

Dans l'exemple décrit ici, le message d'alerte M envoyé par l'avion au système au sol comporte au moins les informations suivantes :

- l'immatriculation $I$ de l'avion ;
- la position du moteur (par exemple, « aile gauche » ou « aile droite ») pour lequel le paramètre EGT est en dépassement ;
- la phase $\varphi$ du vol ;
- la valeur de température maximale $T_{max}$ atteinte lors du dépassement *(ex : $T_{max}$ = 970°C)* ; et
- la durée d du dépassement (ex : *d*=4 min).

Ce message d'alerte M est reçu au cours d'une étape E30 par le système au sol. Le système au sol est un système de traitement de données, constitué d'un ou de plusieurs ordinateurs, et comportant à ce titre, au moins une mémoire vive, une mémoire morte, un processeur et des moyens pour communiquer (ex. une carte réseau) sur un réseau de télécommunication (ex. Internet) avec d'autres dispositifs connectés à ce réseau.

Le système au sol extrait alors du message M les informations $\varphi$, $T_{max}$, d, I ainsi que la position du moteur présentant une anomalie (étape E40). L'extraction de ces informations, ainsi que les traitements ultérieurs réalisés à partir de ces informations, peuvent se faire dès réception du message M ou en variante, ultérieurement, suite à la réception d'un nombre prédéterminé de messages d'alerte ou à la fin du vol.

L'immatriculation I de l'avion ainsi que la position du moteur extraites du message M, permettent d'obtenir une référence R pour le moteur présentant une anomalie (par exemple un numéro de série du moteur). A cette fin, le système au sol utilise un outil de gestion de flotte connu de l'homme du métier, dans lequel à chaque moteur de l'avion immatriculé *I* (moteur identifié par sa position dans l'outil de gestion) est associé le numéro de série du moteur.

Les informations *R*, $\varphi$, $T_{max}$ et *d*, sont ensuite utilisées pour déterminer de façon automatique le niveau de sévérité N du dépassement signalé dans le message M (étape E50).

Dans l'exemple décrit ici, à cette fin, on utilise un diagramme de sévérité du moteur associé à la température EGT. Un tel diagramme, connu de l'homme du métier, est généralement livré avec le moteur. Il dépend de la phase du vol et du type de moteur considérés.

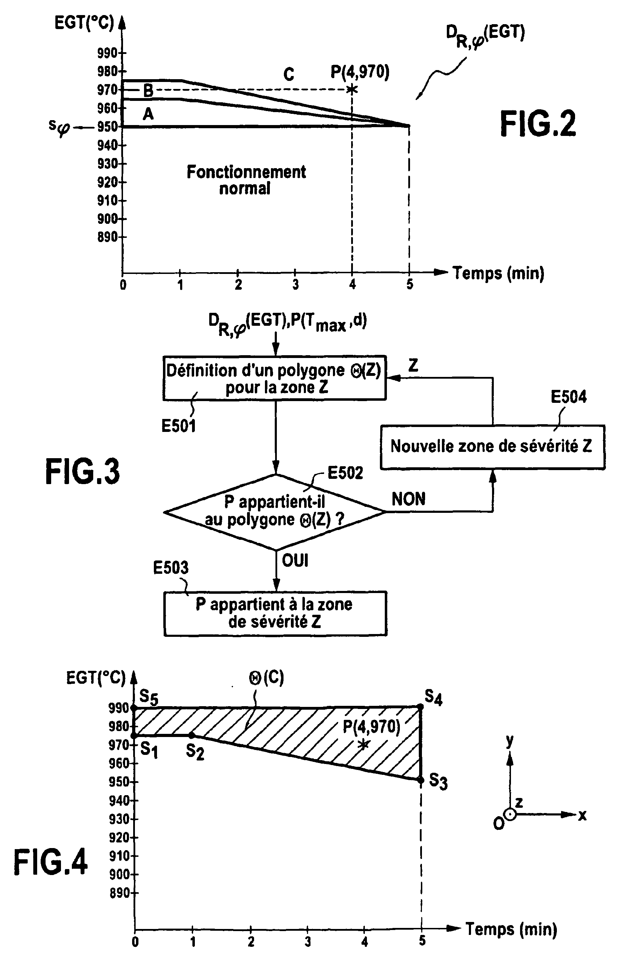

Un exemple de diagramme de sévérité associé à la température EGT d'un moteur est représenté sur la figure 2.

Sur ce diagramme, figurent le seuil d'alerte $S_\varphi$ et une pluralité de zones géométriques de sévérité A, B et C définies à partir du seuil $S_\varphi$ et représentées en fonction des valeurs prises par la température EGT et des durées pendant lesquelles la température EGT prend ces valeurs.

Les zones géométriques de sévérité sont représentatives du niveau de sévérité des dépassements de la température EGT que rencontre le moteur. A chaque zone de sévérité est associé un niveau de sévérité distinct. Par exemple, sur la figure 2 :

- un dépassement correspondant à une valeur maximale $T_{max}^1 = 960°C$ et une durée $d^1$ =1 min et appartenant à la zone géométrique A, est associé à un niveau de sévérité NA (ex : NA= « anormal ») ;
- un dépassement correspondant à une valeur maximale $T_{max}^2 = 970°C$ et une durée $d^2$ = 1min et appartenant à la zone géométrique B, est associé à un niveau de sévérité NB (ex : NB = « détérioration ») ;
- un dépassement correspondant à une valeur maximale $T_{max}^3 = 970°C$ et une durée $d^3$ = 4 min et appartenant à la zone géométrique C, est associé à un niveau de sévérité NC (ex : NC = « surtempérature »).

Ainsi, au cours de l'étape E50 de détermination du niveau de sévérité, on sélectionne tout d'abord, à l'aide de la référence R du moteur de l'avion et de la phase $\varphi$ du vol contenues dans le message M, un diagramme $D_{R,\varphi}$(EGT) de sévérité associé à la température EGT. Pour cela, on interroge par exemple une base de diagrammes de sévérité associés à la température EGT, à l'aide des paramètres R et $\varphi$, selon des moyens d'interrogation d'une base de données connus de l'homme du métier. Le diagramme de sévérité peut être par exemple mémorisé dans une base de la mémoire morte du système au sol, ou encore obtenu en interrogeant un serveur distant.

On détermine ensuite, automatiquement et à l'aide du diagramme $D_{R,\varphi}(EGT)$, le niveau de sévérité N du dépassement signalé dans le message d'alerte M. Pour cela, on identifie, au cours des étapes E501 à E504 représentées sur la figure 3 et décrites ultérieurement, la zone de sévérité (A, B ou C) du diagramme $D_{R,\varphi}(EGT)$ dans laquelle se trouve le point P dont les coordonnées sont données respectivement par la durée *d* et la valeur maximale $T_{max}$ contenues dans le message d'alerte M. A partir de la zone ainsi identifiée, on en déduit le niveau de sévérité N associé. Dans l'exemple de la figure 2, le point P a pour coordonnées (x=4,y=970) et se trouve dans la zone de sévérité C associée au niveau de sévérité NC.

Le niveau de sévérité N ainsi déterminé, on incrémente de 1 un compteur $C_N$ représentatif du nombre de fois où la température EGT du moteur a connu un dépassement du seuil $S_\varphi$ correspondant au niveau de sévérité N (étape E60). Ainsi, dans l'exemple de la figure 2, le compteur $C_{NC}$ associé à la zone de sévérité C est incrémenté de 1.

Dans le mode de réalisation décrit ici, on compare ensuite la valeur du compteur $C_N$ avec un seuil prédéterminé H(N) associé au niveau de sévérité N (étape E70). Le seuil H(N) définit le nombre de dépassements de sévérité N autorisés pour la température EGT avant que le moteur ne doive faire l'objet d'une opération de maintenance. Cette opération de maintenance peut notamment dépendre du niveau de sévérité N.

En variante, le seuil H(N) est le même pour tous les niveaux de sévérité.

Si la valeur du compteur $C_N$ est supérieure au seuil H(N), alors un message est envoyé par le système au sol à un serveur d'un exploitant de l'avion (ex. compagnie aérienne), afin de lui signaler que le seuil H(N) a été franchi par le compteur $C_N$ (étape E80). Ce message est envoyé par exemple par l'intermédiaire des moyens de communication du système au sol via le réseau Internet.

Suite à la réception de ce message, une opération de maintenance sur le moteur de l'avion est commandée par l'exploitant de l'avion. A la suite de cette opération, le compteur $C_N$ est réinitialisé à zéro par le système au sol.

Si au cours de l'étape E70, on détermine que la valeur du compteur $C_N$ est inférieure ou égale au seuil H(N), le système au sol mémorise la valeur du compteur $C_N$ (étape E100) et se place en attente d'un nouveau message d'alerte.

Dans un autre mode de réalisation de l'invention, le système au sol peut également envoyer périodiquement à l'exploitant de l'avion la valeur des compteurs associés à chaque moteur de l'avion. Ceci permet à l'exploitant de l'avion de recevoir un rapport périodique sur l'état de son avion.

Nous allons maintenant décrire, en référence aux figures 3 et 4, une succession d'étapes E501 à E504 pouvant être mises en oeuvre pour déterminer la zone de sévérité dans laquelle se trouve le point P.

En variante, d'autres procédés permettant d'identifier l'appartenance d'un point à une zone géographique (ou à une surface) peuvent être utilisés.

Les étapes E501 à E504 décrites ci-après sont reproduites pour chaque zone de sévérité Z du diagramme (Z=A, B ou C ici), jusqu'à identifier la zone de sévérité dans laquelle se trouve le point P.

On définit tout d'abord, pour la zone de sévérité Z considérée, un polygone $\Theta(Z)$ connexe (étape E501). Ce polygone $\Theta(Z)$ comporte Q sommets $S_i$, i=1..Q.

Le polygone $\Theta(Z)$ est constitué par la zone de sévérité Z lorsque celle-ci est fermée (ex. zones A et B sur la figure 2). Lorsque la zone de sévérité Z n'est pas fermée (ex. zone C), le polygone $\Theta(Z)$ pourra être. défini à partir de la zone de sévérité Z que l'on aura fermée au niveau des valeurs limites des axes du diagramme (pour la zone C représentée sur la figure 2, ces valeurs limites correspondent à Temps = 5 min et EGT = 990°C).

Un exemple d'un polygone $\Theta(Z=C)$ pour la zone de sévérité C est représenté en hachuré sur la figure 4.

On détermine ensuite si le point P appartient au polygone $\Theta(Z)$ ainsi défini (étape E502).

Pour cela :

a) On identifie l'ensemble E des indices i, i=1,..Q, des sommets $S_i$ du polygone $\Theta(Z)$, vérifiant les deux conditions suivantes :

$$0 < \overrightarrow{S_i P} \bullet \overrightarrow{S_i S_{i+1}} < \left\| \overrightarrow{S_i S_{i+1}} \right\|^2 \qquad (1)$$

$$z\left( \overrightarrow{PS_i} \wedge \overrightarrow{PS_{i+1}} \right) > 0 \qquad (2)$$

dans un repère orthonormé (Oxyz) orienté dans le sens direct (ou sens trigonométrique). Dans ce repère, les axes (Ox) et (Oy) sont définis par les axes du diagramme et l'axe (Oz) est orthogonal au plan du diagramme, comme représenté sur la figure 4. Les notations « . » et « ∧ » désignent respectivement le produit scalaire et le produit vectoriel de deux vecteurs. La notation $z(\overline{u})$ désigne la composante du vecteur $\overline{u}$ selon l'axe (Oz). Les sommets $S_i$ et $S_{i+1}$ sont des sommets adjacents, numérotés dans le sens direct (cf. figure 4).

b) On détermine ensuite si, pour au moins un indice j de l'ensemble E, il existe un indice k tel que les triangles $PS_j S_{j+1}$, $PS_{j+1} S_k$ et $PS_k S_j$ sont des triangles directs.

c) Le cas échéant, le point P se trouve dans le polygone $\Theta(Z)$.

Si, au cours de l'étape E502 c), on détermine que le point P ne se trouve pas dans le polygone $\Theta(Z)$, alors les étapes E501 et E502 sont reprises pour une nouvelle zone de sévérité (déterminée à l'étape E504) jusqu'à identifier la zone de sévérité dans laquelle se trouve le point P (ou de façon équivalente ici, jusqu'à identifier le polygone dans lequel le point P se trouve).

Bien entendu, pour un diagramme de sévérité comprenant L zones de sévérité, si au cours de L-1 étapes E502 successives on détermine que le point P n'appartient à aucune des zones testées, alors il n'est pas nécessaire de tester la dernière zone (puisque le point appartiendra nécessairement par déduction à celle-ci).

## Revendications

1. Procédé de caractérisation et de comptage de dépassements d'un seuil ($S_\varphi$) par un paramètre de fonctionnement d'un moteur d'aéronef, **caractérisé en ce que** ledit procédé comprend:

   - une étape de détection (E10) par l'aéronef d'un dépassement du seuil par le paramètre au cours du fonctionnement dudit moteur ;
   - sur détection de ce dépassement, une étape de transmission (E20) automatique par l'aéronef à un système au sol d'un message d'alerte (M) relatif au dépassement ;
   - à partir de ce message (E40), une étape de détermination automatique (E50) d'un niveau de sévérité du dépassement ; et
   - une étape d'incrémentation (E60) d'un compteur représentatif du nombre de fois où le paramètre de fonctionnement du moteur a connu un dépassement correspondant à ce niveau de sévérité.

2. Procédé selon la revendication 1 dans lequel le message d'alerte (M) transmis au système au sol est associé à une phase de vol de l'aéronef et comporte au moins une valeur prise par le paramètre lors du dépassement et la durée du dépassement.

3. Procédé selon la revendication 2 dans lequel le niveau de sévérité du dépassement est déterminé, parmi une pluralité de niveaux de sévérité prédéfinis, à partir de la valeur prise par le paramètre lors du dépassement et de la durée du dépassement, contenues dans le message d'alerte (M).

4. Procédé selon la revendication 2 ou 3 dans lequel au cours de ladite étape de détermination automatique (E50) du niveau de sévérité du dépassement :

   - on sélectionne un diagramme ($D_{R,\varphi}(EGT)$) correspondant au moteur et à la phase en vol de l'aéronef et associé au paramètre de fonctionnement en dépassement, ce diagramme représentant en fonction des valeurs prises par le paramètre et des durées pendant lesquelles le paramètre prend ces valeurs, une pluralité de zones géométriques de sévérité (A,B,C), chaque zone géométrique de sévérité correspondant à un niveau de sévérité distinct ; et
   - on identifie sur le diagramme à quelle zone de sévérité (C) appartient le point (P) dont les coordonnées sont données par la valeur et la durée contenues dans le message d'alerte (M).

5. Procédé selon l'une quelconque des revendications 1 à 4 dans lequel le paramètre de fonctionnement détecté est la température des gaz en sortie de la chambre de combustion du moteur de l'aéronef.

6. Système de caractérisation et de comptage de dépassements d'un seuil ($S_\varphi$) par un paramètre de fonctionnement d'un moteur d'aéronef à partir d'au moins un message d'alerte (M) relatif à un tel dépassement transmis automatiquement par l'aéronef, **caractérisé en ce que** ledit système comprend :

   - des moyens pour déterminer automatiquement, sur réception du message d'alerte (M), un niveau de sévérité du dépassement ; et
   - des moyens pour incrémenter un compteur représentatif du nombre de fois où le paramètre de fonctionnement du moteur a connu un dépassement correspondant au niveau de sévérité.

7. Système selon la revendication 6 dans lequel le message d'alerte (M) est associé à une phase de vol de l'aéronef et comporte au moins une valeur prise par le paramètre lors du dépassement et la durée du dépassement.

8. Système selon la revendication 7, dans lequel le niveau de sévérité du dépassement est déterminé parmi une pluralité de niveaux de sévérité prédéfinis, à partir de la valeur prise par le paramètre lors du dépassement et de la durée du dépassement contenues dans le message d'alerte (M).

9. Système selon la revendication 7 ou 8 dans lequel les moyens pour déterminer automatiquement le niveau de sévérité du dépassement comportent :

   - des moyens pour sélectionner un diagramme ($D_{R,\varphi}(EGT)$) correspondant au moteur et à la phase en vol de l'aéronef et associé au paramètre de fonctionnement en dépassement, ce diagramme représentant en fonction des valeurs prises par le paramètre et des durées pendant lesquelles le paramètre prend ces valeurs, une pluralité de zones géométriques de sévérité (A, B,C), chaque zone géométrique de sévérité correspondant à un niveau de sévérité distinct ; et
   - des moyens pour identifier sur le diagramme à quelle zone de sévérité (C) appartient le point (P) dont les coordonnées sont données par la valeur et la durée contenues dans le message d'alerte (M) pour le paramètre en dépassement.

10. Système selon l'une quelconque des revendications 6 à 9 dans lequel le paramètre de fonctionnement détecté est la température des gaz en sortie de la chambre de combustion du moteur de l'aéronef.

**Claims**

1. A method of characterizing and counting oversteppings of a threshold $(S_\varphi)$ by an operating parameter of an aircraft engine, **characterised in that** said method comprises:

    • a detection step (E10) of the aircraft detecting an overstepping of the threshold by the parameter while said engine is in operation;
    • on detecting this overstepping, a transmission step (E20) of the aircraft automatically transmitting to a ground system a warning message (M) about the overstepping;
    • on the basis of this message (E40), a step of automatically determining (E50) a severity level for the overstepping; and
    • an incrementation step (E60) of incrementing a counter representing the number of times the operating parameter of the engine has presented an overstepping corresponding to this severity level.

2. A method according to claim 1, wherein the warning message (M) transmitted to the ground system is associated with a flight stage of the aircraft and comprises at least one value taken by the parameter during the overstepping and the duration of the overstepping.

3. A method according to claim 2, wherein the severity level of the overstepping is determined, from amongst a plurality of predefined severity levels, on the basis of the value taken by the parameter during the overstepping and of the duration of the overstepping, contained in the warning message (M).

4. A method according to claim 2 or 3, wherein during said step of automatically determining (E50) the severity level of the overstepping:

    • a diagram $(D_{R,\varphi}(EGT))$ is selected corresponding to the engine and to the flight stage of the aircraft and associated with the operating parameter in overstepping, this diagram representing a plurality of geometrical severity zones (A, B,C) as a function of the values taken by the parameter and of the durations for which the parameter took these values, each geometrical severity zone corresponding to a distinct severity level; and
    • the severity zone (C) to which belongs the point (P) of coordinates given by the value and the duration contained in the warning message (M), is identified on the diagram.

5. A method according to any of claims 1 to 4, wherein the detected operating parameter is the temperature of the gas at the outlet of the combustion chamber of the aircraft engine.

6. A system for characterizing and counting oversteppings of a threshold $(S_\varphi)$ by an operating parameter of an aircraft engine on the basis of at least one warning message (M) about such an overstepping transmitted automatically by the aircraft, **characterized in that** said system comprises:

    • means for acting on reception of the warning message (M) to determine automatically a severity level of the overstepping; and
    • means for incrementing a counter representative of the number of times the operating parameter of the engine has presented an overstepping corresponding to the severity level.

7. A system according to claim 6, wherein the warning message (M) is associated with a flight stage of the aircraft and comprises at least one value taken by the parameter during the overstepping and the duration of the overstepping.

8. A system according to claim 7, wherein the severity level of the overstepping is determined, from amongst a plurality of predefined severity levels, on the basis of the value taken by the parameter during the overstepping and of the duration of the overstepping, contained in the warning message (M).

9. A system according to claim 7 or 8, wherein the means for automatically determining the severity level of the overstepping comprise:

    • means for selecting a diagram $(D_{R,\varphi}(EGT))$ corresponding to the engine and to the flight stage of the aircraft, and associated with the operating parameter in overstepping, said diagram representing a plurality of geometrical severity zones (A,B,C) as a function of the values taken by the parameter and of the durations during which the parameter takes these values, each geometrical severity zone corresponding to a distinct severity level; and
    • means for identifying on the diagram to which severity zone (C) belongs the point (P) of coordinates given by the value and the duration contained in the warning message (M) for the parameter in overstepping.

10. A system according to any of claims 6 to 9, wherein the detected operating parameter is the temperature of the gas at the outlet of the combustion chamber of the aircraft engine.

**Patentansprüche**

1. Verfahren zur Kennzeichnung und Zählung von Überschreitungen einer Schwelle ($S_{\varphi}$) durch einen Betriebsparameter eines Flugzeugtriebwerks, **dadurch gekennzeichnet, daß** das Verfahren umfaßt:

   - einen Schritt zur Erfassung (E10) durch das Flugzeug einer Überschreitung der Schwelle durch den Parameter während des Betriebs des Triebwerks,
   - bei Erfassung dieser Überschreitung, einen Schritt zur automatischen Übertragung (E20) einer Warnmeldung (M) bezüglich der Überschreitung, durch das Flugzeug an ein am Boden befindliches System,
   - aufgrund dieser Meldung (E40), einen Schritt zur automatischen Bestimmung (E50) einer Stufe der Schwere der Überschreitung, und
   - einen Schritt zum Inkrementieren (E60) eines Zählers, der repräsentativ dafür ist, wie oft der Betriebsparameter des Triebwerks eine dieser Schwerestufe entsprechende Überschreitung erfahren hat.

2. Verfahren nach Anspruch 1, wobei die an das am Boden befindliche System übertragene Warnmeldung (M) einer Flugphase des Flugzeugs zugeordnet ist und wenigstens einen durch den Parameter während der Überschreitung angenommenen Wert sowie die Dauer der Überschreitung umfaßt.

3. Verfahren nach Anspruch 2, wobei die Schwerestufe der Überschreitung unter einer Vielzahl von vordefinierten Schwerestufen anhand des durch den Parameter während der Überschreitung angenommenen Wertes und der Dauer der Überschreitung, die in der Warnmeldung (M) enthalten sind, bestimmt wird.

4. Verfahren nach Anspruch 2 oder 3, wobei im Laufe des Schrittes der automatischen Bestimmung (E50) der Schwerestufe der Überschreitung:

   - ein Diagramm ($D_{R,\varphi}$(EGT)) gewählt wird, das dem Triebwerk und der Flugphase des Flugzeugs entspricht und dem überschreitenden Betriebsparameter zugeordnet ist, wobei dieses Diagramm in Abhängigkeit der durch den Parameter angenommenen Werte und der Dauern, über die der Parameter diese Werte annimmt, eine Vielzahl von geometrischen Schwerebereichen (A, B, C) darstellt, wobei jeder geometrische Schwerebereich einer gesonderten Schwerestufe entspricht, und
   - an dem Diagramm erkannt wird, zu welchem Schwerebereich (C) der Punkt (P) gehört, dessen Koordinaten durch den Wert und die Dauer, welche in der Warnmeldung (M) enthalten sind, gegeben sind.

5. Verfahren nach einem der Ansprüche 1 bis 4, wobei der erfaßte Betriebsparameter die Temperatur der Gase am Ausgang der Brennkammer des Triebwerks des Flugzeugs ist.

6. System zur Kennzeichnung und Zählung von Überschreitungen einer Schwelle ($S_{\varphi}$) durch einen Betriebsparameter eines Flugzeugtriebwerks, anhand wenigstens einer Warnmeldung (M) bezüglich einer solchen Überschreitung, die durch das Flugzeug automatisch übertragen wird, **dadurch gekennzeichnet, daß** das System umfaßt:

   - Mittel, um bei Empfang der Warnmeldung (M) automatisch eine Stufe der Schwere der Überschreitung zu bestimmen, sowie
   - Mittel zum Inkrementieren eines Zählers, der repräsentativ dafür ist, wie oft der Betriebsparameter des Triebwerks eine der Schwerestufe entsprechende Überschreitung erfahren hat.

7. System nach Anspruch 6, wobei die Warnmeldung (M) einer Flugphase des Flugzeugs zugeordnet ist und wenigstens einen durch den Parameter während der Überschreitung angenommenen Wert sowie die Dauer der Überschreitung umfaßt.

8. System nach Anspruch 7, wobei die Schwerestufe der Überschreitung unter einer Vielzahl von vordefinierten Schwerestufen anhand des durch den Parameter während der Überschreitung angenommenen Wertes und der Dauer der Überschreitung, die in der Warnmeldung (M) enthalten sind, bestimmt wird.

9. System nach Anspruch 7 oder 8, wobei die Mittel zum automatischen Bestimmen der Schwerestufe der Überschreitung umfassen:

   - Mittel zum Auswählen eines Diagramms ($D_{R,\varphi}$(EGT)), das dem Triebwerk und der Flugphase des Flugzeugs entspricht und dem überschreitenden Betriebsparameter zugeordnet ist, wobei dieses Diagramm in Abhängigkeit der durch den Parameter angenommenen Werte und der Dauern, über die der Parameter diese Werte annimmt, eine Vielzahl von geometrischen Schwerebereichen (A, B, C) darstellt, wobei jeder geometrische Schwerebereich einer gesonderten Schwerestufe entspricht, und

- Mittel zur Erkennung an dem Diagramm, zu welchem Schwerebereich (C) der Punkt (P) gehört, dessen Koordinaten durch den Wert und die Dauer, welche in der Warnmeldung (M) für den überschreitenden Parameter enthalten sind, gegeben sind.

**10.** System nach einem der Ansprüche 6 bis 9, wobei der erfaßte Betriebsparameter die Temperatur der Gase am Ausgang der Brennkammer des Triebwerks des Flugzeugs ist.

**FIG.1**

Détection par l'avion d'un dépassement du seuil $S_\varphi$ par la température EGT — E10

Envoi automatique d'un message d'alerte M relatif au dépassement par l'avion au système au sol — E20

Réception par le système au sol du message d'alerte M — E30

Extraction des informations I, position du moteur, $\varphi$, $T_{max}$ et d du message M — E40

Détermination du niveau de sévérité N du dépassement — E50

Incrémentation du compteur $C_N$ associé aux dépassements de sévérité N — E60

E70

OUI — $C_N > H(N)$ ? — NON

Envoi d'un message au serveur de la compagnie aérienne pour opération de maintenance — E80

Mémorisation du compteur $C_N$ — E100

Après opération de maintenance : $C_N = 0$ — E90

EGT(°C)

$D_{R,\varphi}(EGT)$

**FIG.2**

Fonctionnement
normal

Temps (min)

$D_{R,\varphi}(EGT), P(T_{max}, d)$

Définition d'un polygone ⊙(Z)
pour la zone Z

Z

E501

E504

**FIG.3**

E502

P appartient-il
au polygone ⊙(Z) ?

NON

Nouvelle zone de sévérité Z

E503

OUI

P appartient à la zone
de sévérité Z

EGT(°C)

⊙(C)

**FIG.4**

P(4,970)

Temps (min)

**EP 2 072 399 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1122694 A